# EUROPEAN PATENT APPLICATION

(11) **EP 4 746 046 A1**
(43) Date of publication of application: **20.05.2026**
(21) Application number: 24840122.6
(22) Date of filing: 12.07.2024
(51) Int. Cl.: H01M 4/04, B08B 15/00, H01M 10/04

(54) **ELECTRODE NOTCHING DEVICE**

(30) Priority: 12.07.2023 KR 20230090711; 09.07.2024 KR 20240090523
(71) Applicant: SK On Co., Ltd., Seoul 03161 (KR)
(72) Inventor: KIM, Jeong Min, Daejeon 34124 (KR); CHOI, Gyu Ik, Daejeon 34124 (KR)
(74) Representative: Stolmár & Partner Patentanwälte PartG mbB
(86) International application number: PCT/KR2024/009987
(87) International publication number: WO 2025/014312

(57) **Abstract**

An electrode notching device may include a molding unit for separating a predetermined region of an electrode; a pipe-shaped transfer unit for transferring scraps separated from the electrode; a suction unit for providing suction force to the transfer unit; an intake port provided in one area of the transfer unit so as to inhale external air; and a cover unit for opening and closing the intake port.

## Description

### TECHNICAL FIELD

This disclosure relates to an electrode notching device.

### BACKGROUND

A secondary battery is a battery that converts electrical energy into chemical energy for storage, enabling reuse multiple times through charging and discharging cycles. Due to their economical and eco-friendly characteristics, secondary batteries are used diversely and extensively across various industries. Among secondary batteries, lithium secondary batteries are particularly widely utilized across industries, including portable devices requiring high-density energy.

The notching process may generate scrap of various sizes and types. This scrap can be collected by a collection device and disposed of. Research is actively underway on methods to effectively remove scrap while minimizing its impact on electrode quality.

### SUMMARY

The technical problem addressed by this disclosure is the effective removal of scrap separated from the electrode.

Another problem addressed by this disclosure is minimizing the impact on the electrode during scrap removal.

Furthermore, this disclosure may be widely applied in green technology fields such as electric vehicles, battery charging stations, and other battery-utilizing applications like solar power generation and wind power generation.

Furthermore, this disclosure can be used in eco-friendly electric vehicles and hybrid vehicles to prevent climate change by suppressing air pollution and greenhouse gas emissions.

An electrode notching device according to an aspect of the present disclosure may comprise: a forming unit for separating a predetermined region of an electrode; a transfer unit in a pipe-shaped for transferring scraps separated from the electrode; a suction unit for providing suction force to the transfer unit; an intake port provided in a portion of the transfer unit for intaking external air; and a cover unit for opening and closing the intake port.

In an aspect, the electrode notching device may further comprising: a control unit for controlling the cover unit based on the suction force to adjust the area through which the intake port opens.

In an aspect, the transfer unit may branch from a branching point on the path from the suction unit toward the cover unit.

In an aspect, the transfer unit may include a first transfer unit directed from the branching point toward the intake port, and a second transfer unit directed from the branching point toward the forming unit.

In an aspect, the intake port may be provided at one end of the first transfer unit.

In an aspect, the intake port may be provided at a position higher than the branching point.

In an aspect, the forming unit may separate the predetermined region by cutting the electrode.

In an aspect, the forming unit may include a first body, a second body with the electrode interposed therebetween, and a through hole penetrating the first body.

In an aspect, a space inside the through hole may be in communicating with an interior of the transfer unit.

In an aspect, the through hole may be provided in a plurality.

In an aspect, the first body may include a placement region where the electrode can be placed, and the through hole may be formed to overlap at least a portion of the placement region.

In an aspect, the cover unit may include a shaft portion extending across the intake port, and a disk portion rotatable about the shaft portion.

In an aspect, the cover unit may open the intake port when the suction force is equal to or greater than a preset first pressure.

In an aspect, the cover unit may close the intake port when the suction force is equal to or lower than a preset second pressure, which is lower than a preset first pressure.

According to an aspect of the present disclosure, scrap separated from the electrode may be effectively removed.

Furthermore, according to another aspect of the present disclosure, the impact on the electrode during scrap removal may be minimized.

### BRIEF DESCRIPTION OF THE DRAWINGS

FIG. 1 illustrates an electrode notching device according to an aspect of the present disclosure.
FIG. 2 illustrates a forming unit according to an aspect of the present disclosure.
FIG. 3 is a block diagram illustrating a control method for the electrode notching device according to an aspect of the present disclosure.
FIG. 4 illustrates an electrode according to an aspect of the present disclosure.
FIG. 5 illustrates a portion of the forming unit according to an aspect of the present disclosure.
FIG. 6 illustrates a cover unit according to another aspect of the present disclosure.
FIG. 7 illustrates a cover unit opening and closing an intake port according to another aspect of the present disclosure.

### DETAILED DESCRIPTION

Hereinafter, the present disclosure will be described in detail with reference to the accompanying drawings. However, this is merely illustrative, and the present disclosure is not limited to the specific aspects described by way of example.

Specific terms used herein are for convenience of description only and are not intended to limit the exemplary aspects described.

For example, expressions such as "same" and "identical" indicate not only strictly identical states but also states where tolerances exist or where differences exist to the extent that the same function is achieved.

Expressions indicating relative or absolute positioning, such as "in any direction," "along any direction," "parallel," "perpendicular," "toward the center," "concentric," or "coaxial," indicate not only strictly such positioning but also a state where there is a displacement relative to the specified direction within a tolerance or an angle or distance that achieves the same function.

To explain the present disclosure, the following description is based on a spatial Cartesian coordinate system defined by mutually orthogonal X, Y, and Z axes. Each axis direction (X-axis direction, Y-axis direction, Z-axis direction) refers to the two directions in which the respective axis extends.

The X-direction, Y-direction, and Z-direction mentioned below are described to ensure clear understanding of this disclosure; it is understood that these directions may be defined differently depending on the chosen reference point.

The use of terms such as "first," "second," and "third" before components mentioned below is solely to avoid confusion regarding the components being referred to and is unrelated to any order, importance, or master-subordinate relationship between the components. For example, an aspect including only a second component without a first component is also possible.

The terminology used in this disclosure is for describing specific aspects and is not intended to limit the scope of the claims. As used in the description of the aspects and the appended claims, the singular form is intended to include the plural form unless the context clearly indicates otherwise.

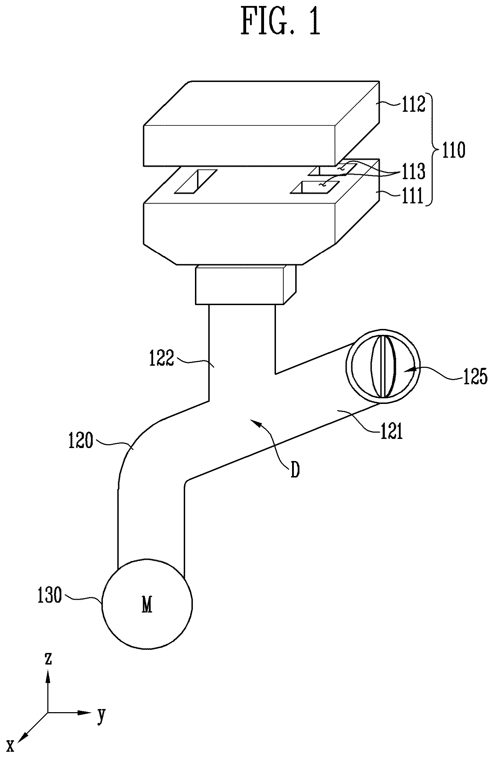

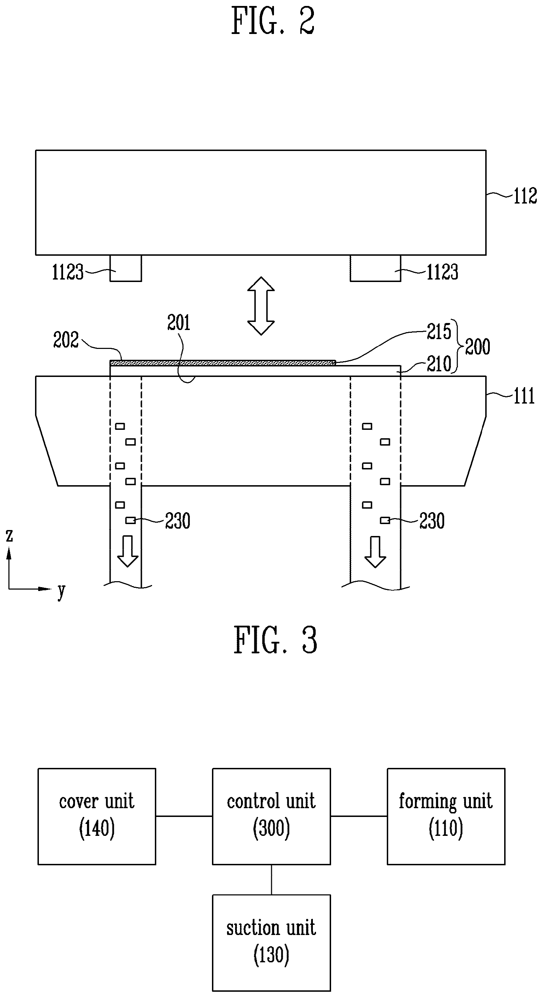

FIG. 1 illustrates an electrode notching device 100 according to an aspect of the present disclosure, and FIG. 2 illustrates a forming unit 110 according to an aspect of the present disclosure.

The electrode notching device 100 of the present disclosure comprises: a forming unit 110 for separating a predetermined region of an electrode 200; a transfer unit 120 in a pipe-shaped for transferring scraps 230 separated from the electrode 200; a suction unit 130 for providing suction force to the transfer unit 120; an intake port 125 provided in a portion of the transfer unit 120 for intaking external air; and a cover unit 140 for opening and closing the intake port 125.

The electrode notching device 100 of the present disclosure may be used in an electrode notching process. The electrode notching process may refer to a process for manufacturing an electrode tab by cutting the un-coated region of an electrode 200. More specifically, the electrode notching process may be a process for manufacturing an electrode lead by removing a portion of an electrode assembly.

In an aspect, the forming unit 110 may apply pressure to the electrode 200. Through this, the forming unit 110 may cut the electrode 200. The forming unit 110 may cut the electrode 200 to separate a predetermined region 203 of the electrode 200. At this time, a portion separated from the electrode 200 may be scraps 230. The forming unit 110 may include a first body 111, a second body 112 with the electrode 200 interposed therebetween, and a through hole 113 penetrating the first body 111.

The electrode 200 may be positioned between the first body 111 and the second body 112. The electrode 200 positioned between the first body 111 and the second body 112 may be pressurized by the first body 111 and the second body 112 so that one region of the electrode is cut.

The first body 111 and the second body 112 may each press against a first surface 201 of the electrode 200 and a second surface 202 of the electrode 200 opposite the first surface 201. Through this, the first body 111 and the second body 112 may separate a predetermined region 203 of the electrode 200.

Referring to FIG 1, the first body 111 may be positioned at the bottom (e.g., in the Z-axis direction), and the second body 112 may be positioned at the top (e.g., in the Z-axis direction). The electrode 200 may be placed on the first body 111. The first body 111 may support the electrode 200. The second body 112 may move toward or away from the first body 111. In an aspect, the first body 111 may be a die. The second body 112 may be a punch.

When separating a predetermined region 203 of the electrode 200, scraps 230 may be generated. The present disclosure may further include a transfer unit for transferring the scraps 230. To transfer the scraps 230, a suction unit 130 may provide suction force to the transfer unit 120. That is, the scraps 230 may be sucked into the interior of the transfer unit 120. The scraps 230 may be removed after being collected via the transfer unit 120.

To allow scraps 230 from the electrode 200 located on the first body 111 to be sucked into the transfer unit 120, a through hole 113 may be formed through the first body 111. The through hole 113 may penetrate the first body 111. More specifically, the through hole 113 may be configured to penetrate the first body 111 from one surface where the electrode 200 is placed toward the opposite surface.

Through this, the first body 111 supports the electrode 200, and as the electrode 200 is cut, the scraps 230 may be collected inside the through hole 113.

Referring to FIG 2, the through hole 113 may be provided on one surface of the first body 111 where the electrode 200 is placed. When the placed electrode 200 is cut by the second body 112, scraps 230 may be collected through the through hole 113.

The space inside the through hole 113 may be in communicating with the interior of the transfer unit 120. One end of the transfer unit 120 may be connected with the through hole 113. One end of the through hole 113 may be formed on one surface of the first body 111, and the other end of the through hole 113 may be connected to the transfer unit 120. Through this, suction force provided to the transfer unit 120 may be provided to the through hole 113. By providing suction to the through hole 113, scraps 230 scattered into the air during electrode cutting may be effectively collected inside the through hole 113. To transmit the suction force, the through hole 113 and the transfer unit 120 may be connected in a sealed manner.

The electrode notching device 100 of the present disclosure may include a suction unit 130 for providing suction force. The suction unit 130 may provide suction force to the transfer unit 120. The suction unit 130 may also provide suction force to the through hole 113.

In an aspect, the suction unit 130 may include a motor and a fan. The motor may cause the suction unit 130 to generate negative pressure, and the negative pressure may cause suction force to be generated toward the suction unit 130.

The suction unit 130 may be connected to the transfer unit 120. To transmit the negative pressure generated in the suction unit 130 to the transfer unit, the suction unit 130 and the transfer unit 120 may be connected in a sealed manner.

Referring to FIG 1, the suction force generated at the suction unit 130 may also be transmitted to the transfer unit 120 and the through hole 113. This allows scraps 230 located on the first body 111 to be sucked into the interior of the transfer unit 120 and collected.

However, if excessive suction force is applied to the through hole 113, an electrode collector 210 may be sucked into the interior of the through hole 113. This can cause the sheet-shaped electrode collector 210 to fold or tear. Therefore, maintaining an appropriate suction force is important.

The transfer unit 120 of the present disclosure includes an intake port 125 provided in a portion thereof for intaking external air, and a cover unit 140 for opening and closing the intake port 125. The intake port 125 may be formed by penetrating a portion of the transfer unit 120. The interior and exterior of the transfer unit 120 may be in communication through the intake port 125.

The cover unit 140 can open and close the intake port 125. When the intake port 125 is open, a large amount of external air may be sucked in through the intake port 125. When the intake port 125 is closed, the inflow of external air through the intake port 125 will be blocked. In the aspect, the cover unit 140 may be a damper.

When the intake port 125 is closed, the suction force provided by the suction unit 130 may be fully transmitted to the through hole 113. However, opening the intake port 125 may cause a loss of suction force. That is, opening the intake port 125 may reduce the negative pressure sucking scraps 230 into the through hole 113.

The suction unit 130 may be difficult to finely adjust the suction force. Therefore, the suction force provided to the through hole may be indirectly controlled by controlling the amount of external air inflow.

The transfer unit 120 may branch from a branching point D on the path from the suction unit 130 toward the cover unit 140. The transfer unit 120 may include a plurality of paths branching from the branching point D. Suction force may be provided to each of the plurality of paths. The direction of each suction force provided to the plurality of paths may be toward the suction unit 130.

The transfer unit 120 may include a first transfer unit 121 directed from the branching point D toward the intake port 125; and a second transfer unit 122 directed from the branching point D toward the forming unit 110.

The first transfer unit 121 and the second transfer unit 122 may meet at the branching point D. The interior of the first transfer unit 121 and the interior of the second transfer unit 122 may be in communicating with each other. This allows external air flowing into the first transfer unit 121 to affect the suction force of the second transfer unit 122.

Referring to Fig. 1, the intake port 125 may be provided at one end of the first transfer unit 121. The first transfer unit 121 may extend outward from the branching point D, and the intake port 125 may be provided at one end of the extended first transfer unit 121. That is, the first transfer unit 121 may directed from the branching point D to the intake port 125.

The suction force of the suction unit 130 may be transmitted to the first transfer unit 121. When the intake port 125 is open, external air may flow into the first transfer unit 121. The suction force of the second transfer unit 122 may decrease due to the inflowing external air.

The through hole 113 may be connected to one end of the second transfer unit 122. The second transfer unit 122 may extend outward from the branching point D, and one end of the extending second transfer unit 122 may be connected to the through hole 113. That is, the second transfer unit 122 may extend toward the through hole 113 from the branching point D.

Ultimately, the scraps 230 will be collected inside the through hole 113 and moved toward the suction unit 130 via the second transfer unit 122.

The intake port 125 may be formed at a position higher than the branching point D. This is to prevent scraps 230 transferred via the second transfer unit 122 from being transferred to the first transfer unit 121.

The scraps 230 transferred via the second transfer unit 122 can be transferred along two paths at the branching point D. If the intake port 125 is formed at a position higher than the branching point D, the possibility of the scraps 230 being transferred to the first transfer unit 121 may be minimized.

Meanwhile, the present disclosure may further include a pressure sensor (not shown) for measuring suction force. The pressure sensor may be located inside the transfer unit 120. The pressure sensor can measure the suction force inside the transfer unit 120. More specifically, the pressure sensor may be positioned between the branching point D and the suction unit 130.

FIG. 3 is a block diagram illustrating a control method for the electrode notching device 100 according to an aspect of the present disclosure.

The present disclosure may further include a control unit 300 controlling the cover unit 140 based on the suction force to adjust the area through the intake port 125 opens. The control unit 300 may increase or decrease the area of the intake port 125 that is opened based on the suction force.

The control unit 300 may control the cover unit 140. Referring to FIG 3, the control unit 300 may control the suction unit 130. The control unit 300 can control the operation of the suction unit 130 or adjust the intensity of the negative pressure. Furthermore, the control unit 300 can control the forming unit 110. The control unit can control the movement of the second body 112.

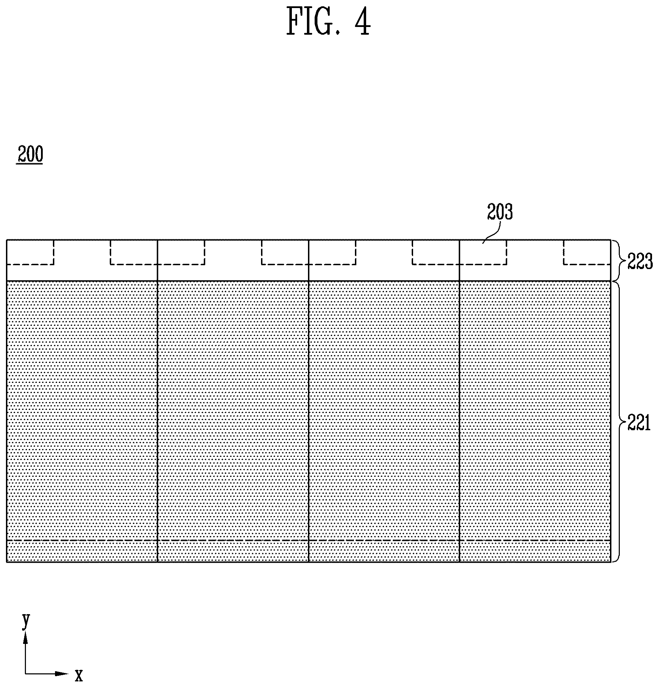

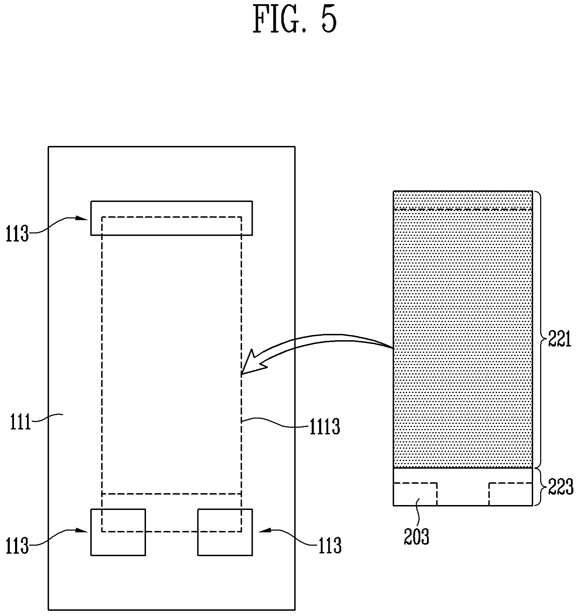

FIG. 4 illustrates an electrode 200 according to an aspect of the present disclosure, and FIG. 5 illustrates a portion of the forming unit 110 according to an aspect of the present disclosure.

The scraps 230 separated from the electrode 200 may be part of the electrode collector 210. The electrode 200 may include an electrode collector 210 and an electrode active material 215. The electrode active material 215 may be coated onto the electrode collector 210. The electrode 200 may include a coating area 221 where the electrode active material 215 is coated and an uncoated area 223 where the electrode active material 215 is not coated. In an aspect, the electrode current collector 210 may include any one of stainless steel, nickel, aluminum, titanium, copper, and alloys thereof, and may be a film, sheet, or foil, but is not limited thereto.

In the aspect, the electrode active material 215 may be any one of lithium metal oxide, crystalline carbon, amorphous carbon, carbon composite, carbon fiber, and other carbon-based materials, lithium alloy, silicon, or tin, but is not limited thereto.

In the aspect, the electrode current collector 210 may be provided in a sheet shape and extend along a longitudinal direction (e.g., the X-axis direction). The electrode active material 215 may be coated on the electrode current collector 210 along the longitudinal direction. The uncoated area 223 may be formed on one side of the coating area 221, and the width of the uncoated area 223 (e.g., in the Y-axis direction) may be shorter than the width of the coating area 221. The predetermined region 203 may be formed in the uncoated area 223. An electrode tab may be formed by separating the predetermined region 203.

Referring to FIG 4, the predetermined region 203 may have a shape where the central area is recessed within each unit electrode 200. That is, by cutting out the predetermined region 203, the electrode tab may be provided with a shape where the central area protrudes. However, the predetermined region 203 is not limited to this and may be formed into various shapes.

The first body 111 includes a placement region 1113 where the electrode 200 can be placed, and the through hole 113 may be formed to overlap at least a portion of the placement region 1113.

The electrode 200 may be placed on one surface of the first body 111. To ensure the electrode 200 is precisely cut, the electrode 200 may be placed within the placement region 1113 of the first body 111. After the electrode is placed in the placement region 1113, the second body 112 may move toward the first body 111. This allows the second body 112 to separate the predetermined region 203 of the electrode.

Referring to FIG 5, the placement region 1113 may be formed on one surface of the first body 111. In the aspect, the placement region 1113 may be visibly formed on the first body 111. The forming unit 110 may further include a fixing member (not shown) that presses the electrode 200 when the electrode 200 is placed on the first body 111. The fixing member may fix the electrode 200 to ensure stable cutting. For example, the fixing member may be a gripper.

In another aspect, the placement region 1113 may be a virtual region stored on the system. For example, the control unit 300 may store information about the placement region. The through hole 113 may be formed to overlap at least a portion of the placement region 1113. That is, along the direction from the first body 111 toward the second body 112 (e.g., the Z-axis direction), the through hole 113 may overlap at least a portion of the placement region 1113. That is, when an electrode 200 is placed on the first body 111, at least a portion of the electrode 200 may be positioned over the through hole 113.

Meanwhile, referring again to FIG 2, the second body 112 may further include a cutting portion 1123. The cutting portion 1123 may be a part that presses the electrode. The cutting portion 1123 may press the electrode to cut it. For example, the cutting portion may be a knife.

The cutting portion 1123 may move toward the first body 111 to cut the electrode 200. At this time, one end of the cutting portion 1123 may be inserted into the through hole 113. For this purpose, the cutting portion 1123 may be formed on one surface of the second body 112 corresponding to the position of the through hole 113. In other words, the cutting portion 1123 may be formed on a surface facing the first body 111, and when the second body 112 and the first body 111 approach each other, the cutting portion 1123 may be positioned to be inserted into the through hole 113.

Insertion of the cutting portion 1123 into the through hole 113 may increase the movement path of the second body 112, enabling efficient cutting of the electrode 200.

The through hole 113 may be provided in a plurality. The plurality of through hole 113 may be arranged spaced apart from each other. Each through hole 113 may be connected to a respective transfer unit 120. Referring to FIG 5, the through hole 113 may be formed at one end and the other end of the placement region 1113, respectively.

In an aspect, the coating area 221 of the electrode 200 may also be separated. In this case, the predetermined region 203 of the electrode may be formed in the coating area 221. Furthermore, the through hole 113 may be provided at a position corresponding to the coating area 221 of the electrode.

Referring to FIG 5, through hole 113 may be provided at positions corresponding to the uncoated area 223 and the coating area 221 of the electrode, respectively. A cutting portion 1123 of the second body 112 corresponding to each through hole 113 may be inserted into the through hole 113 to separate a predetermined region 203 of the electrode 200.

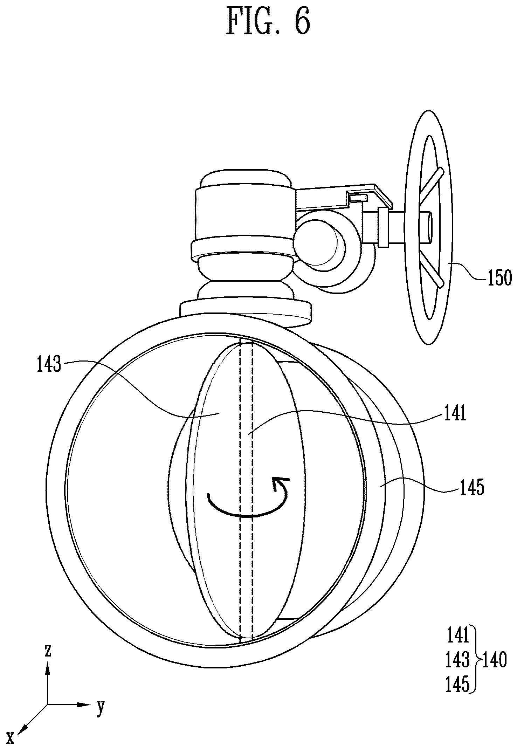

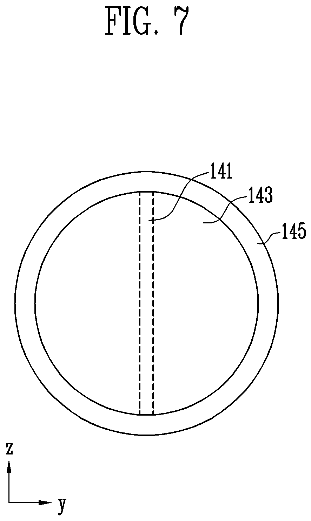

FIG. 6 illustrates a cover unit 140 according to another aspect of the present disclosure, and FIG. 7 illustrates a cover unit opening and closing an intake port 125 according to another aspect of the present disclosure.

Meanwhile, the X-axis, Y-axis, and Z-axis directions shown in FIG. 6 are merely illustrated for the convenience of explaining FIG. 6 and may indicate different directions from the X-axis, Y-axis, and Z-axis in other drawings.

The cover unit 140 may include a shaft portion 141 extending across the intake port 125 and a disk portion 143 rotatable about the shaft portion 141. As described above, the intake port 125 may be formed by penetrating the transfer portion, allowing external air to enter through the penetrated area. The shaft portion 141 may be formed in a direction crossing the penetrated area.

The shaft portion 141 may pass through the center of the penetrated area. This is to completely close the area opened by the intake port 125 when the shaft portion 141 rotates.

The disk portion 143 can open or close the intake port 125. More specifically, the disk portion 143 can close the area where the intake port 125 penetrates the transfer portion. The disk portion 143 can rotate about the shaft portion 141. Depending on the position of the disk portion 143, it can completely close the intake port.

To enable the disk portion 143 to rotate about the shaft portion 141, the shaft portion 141 can be inserted into the disk portion 143 along the diameter direction of the disk portion 143. Rotation of the disk portion 143 allows adjustment of the area through which the intake port 125 is opened.

The cover unit 140 may further include a cover body 145. The cover body 145 may be insertable into the intake port 125. When the cover body 145 is inserted into the intake port 125, the space between the cover body 145 and the intake port 125 may be maintained in a sealed manner. That is, air cannot pass between the cover body 145 and the intake port 125, and external air can enter through the cover body 145. For example, the cover body 145 may be snap-fitted into the intake port 125 or connected by welding.

Meanwhile, when the cover body 145 is provided, the shaft portion 141 may extend across the cover body 145. When the cover body 145 is not provided, the shaft portion 141 may extend across the intake port 125.

Referring to FIGS. 6 and 7, the disk portion 143 can open the cover body 145. More specifically, the disk portion 143 can partially open the cover body 145 to regulate the amount of external air being sucked in. Also, referring to FIG. 7, the disk portion 143 can close the intake port 125. In this case, external air will not be able to pass through the intake port 125. Meanwhile, the electrode notching device 100 may further include a cover valve 150. The cover valve 150 can control the rotation of the disk portion 143. By operating the cover valve 150, the rotation of the disk portion 143 can be controlled.

A user can manually operate the cover valve 150. For example, if a user rotates the cover valve 150 in a first direction, the disk portion 143 can rotate. That is, a user can operate the cover valve 150 to increase the amount of external air flowing into the transfer unit 120. Additionally, the user can operate the cover valve 150 to reduce the amount of external air flowing into the transfer unit 120.

Of course, the cover valve 150 may not be provided. As described above, the control unit 300 can control the cover unit 140.

If the suction force is equal to or greater than a preset first pressure, the cover unit 140 can open the intake port 125. If the suction force is lower than or equal to a preset second pressure, which is lower than the preset first pressure, the cover unit 140 can rotate to close the intake port 125.

The suction force can stably suck the scraps 230 within a range below the first pressure and above the second pressure. If the suction force is equal to or greater than the first pressure, the electrode collector 210 may be sucked into the interior of the through hole 113 and damaged. Furthermore, if the suction force is less than or equal to the second pressure, the scraps 230 may not be sucked into the interior of the through hole 113. It is necessary to maintain the suction force within the range of the first pressure to the second pressure.

If the suction force is equal to or greater than the first pressure, the intake port 125 can be opened while the intake port 125 is in a fully closed state. In the aspect, the area by which the intake port 125 is opened can be determined according to a predetermined formula. In another aspect, the area of the intake port 125 that is opened can be gradually increased while confirming the degree to which scrap is sucked in. This allows the predetermined region 203 of the electrode 200 to be separated without damaging the electrode 200, while observing the state of the electrode 200.

If the suction force is equal to or lower than the second pressure, the intake port 125 can be fully closed. When the suction port is fully closed, external air may not be sucked in through the intake port 125. Consequently, the suction force provided to the second transfer unit 122 can be increased.

The present disclosure may be practiced in various forms and modifications, and the scope of the disclosure is not limited to the above-described aspects. The above description is merely an example applying the principles of the present disclosure, and other configurations may be included within the scope of the disclosure without departing from its scope.

## Claims

1. An electrode notching device, comprising:
a forming unit for separating a predetermined region of an electrode;
a transfer unit in a pipe-shaped for transferring scraps separated from the electrode;
a suction unit for providing suction force to the transfer unit;
an intake port provided in a portion of the transfer unit for intaking external air; and
a cover unit for opening and closing the intake port.

2. The electrode notching device according to claim 1, further comprising:
a control unit for controlling the cover unit based on the suction force to adjust the area through which the intake port opens.

3. The electrode notching device according to claim 1, wherein the transfer unit branches from a branching point on the path from the suction unit toward the cover unit.

4. The electrode notching device according to claim 3, wherein the transfer unit includes a first transfer unit directed from the branching point toward the intake port, and a second transfer unit directed from the branching point toward the forming unit.

5. The electrode notching device according to claim 4, wherein the intake port is provided at one end of the first transfer unit.

6. The electrode notching device according to claim 4, wherein the intake port is provided at a position higher than the branching point.

7. The electrode notching device according to claim 1, wherein the forming unit separates the predetermined region by cutting the electrode.

8. The electrode notching device according to claim 1, wherein the forming unit includes a first body, a second body with the electrode interposed therebetween, and a through hole penetrating the first body.

9. The electrode notching device according to claim 8, wherein a space inside the through hole is in communicating with an interior of the transfer unit.

10. The electrode notching device according to claim 8, wherein the through hole is provided in a plurality.

11. The electrode notching device according to claim 8, wherein the first body includes a placement region where the electrode can be placed, and the through hole is formed to overlap at least a portion of the placement region.

12. The electrode notching device according to claim 1, wherein the cover unit includes a shaft portion extending across the intake port, and a disk portion rotatable about the shaft portion.

13. The electrode notching device according to claim 12, wherein the cover unit opens the intake port when the suction force is equal to or greater than a preset first pressure.

14. The electrode notching device according to claim 12, the cover unit closes the intake port when the suction force is equal to or lower than a preset second pressure, which is lower than a preset first pressure.
